# EUROPEAN PATENT SPECIFICATION

(11) **EP 2 774 275 B1**
(45) Date of publication and mention of the grant of the patent: **25.12.2019**
(21) Application number: 11875084.3
(22) Date of filing: 31.10.2011
(51) Int. Cl.: H04B 7/04, H01Q 3/24, H01Q 3/26, H04L 25/02, H04B 7/08

(54) **A METHOD AND A RADIO BASE STATION FOR ANTENNA/NETWORK RECONFIGURATION**
VERFAHREN UND FUNKBASISSTATION ZUR ANTENNEN-/NETZREKONFIGURATION
PROCÉDÉ ET STATION DE BASE RADIO POUR RECONFIGURATION D'ANTENNE/RÉSEAU

(43) Date of publication of application: 10.09.2014
(73) Proprietor: Telefonaktiebolaget LM Ericsson (publ), 164 83 Stockholm (SE)
(72) Inventor: LANDSTRÖM, Sara, S-974 34 Luleå (SE); SIMONSSON, Arne, S-954 33 Gammelstad (SE); PETERSSON, Sven, S-433 69 Sävedalen (SE)
(74) Representative: Brann AB
(86) International application number: PCT/SE2011/051298
(87) International publication number: WO 2013/066220

(56) References cited:
- EP-A1- 1 507 427
- EP-A1- 1 507 427
- EP-A1- 2 175 573
- WO-A1-2012/152306
- WO-A2-01/54301
- US-A1- 2011 103 504
- US-B1- 6 438 389
- TNO ET AL.: 'BS probing approach for energy saving wake up in hotspot' 3GPP TSG RAN WG3 MEETING #70 15 November 2010, JACKSONVILLE, FLORIDA, USA, XP050466304

## Description

### Technical field

The present disclosure relates to antenna/network reconfiguration and in particular to determining an antenna/network configuration to use by a radio base station.

### Background

The radio communication networks become more and more complex. Increasing number of subscribers and new communication services to be supported by the radio communication networks put higher and higher demands on the networks. One way of increasing capacity is network densification by adding more and more radio base stations to the network making each cell, i.e. the coverage area of a radio base station, smaller. However, this results in less predictable cell coverage areas compared to large macro cells. Heterogeneous networks with different node types at different power levels also result in less predictable cell coverage areas and handover regions. The networks are not static but continuously evolved to meet traffic increase.

Different tools and products have been introduced to make the networks easier to maintain and to evolve. One example is Self Organising Networks, SONs. which automatically configures radio network parameters.

The antenna systems have become more and more advanced which enables making the cells more flexible and also enables dynamic reconfiguration for example according to changes in traffic load and/or special distribution.

One problem with SON is that it detects a change in e.g. traffic load and re-configures radio network parameters accordingly. Then it measures or evaluates the radio situation and in case the change in radio network parameters where not satisfactorily, then the SON may change back to the previous configuration or initiate a further change. This may result in a temporarily reduction in overall performance in the cell in case a change results in a less favourable configuration as the previous.

Another problem is that the re-configured radio network parameters are not optimal in the sense that they are determined based on a current configuration and a detected change in circumstances, such as an increase in traffic load.

Yet another problem is that potentially reduced coverage after a reconfiguration is difficult to measure since mobiles out of cover cannot report as they are out of cover. One method to check coverage is with drive tests. Drive tests are however costly and time consuming. EP1507427 A1 describes a method for beam selection in a wireless cellular telecommunication system. US6438389 B1 describes a transceiver device that periodically measures signal quality in several fixed beams and selects the highest quality beams for each subscriber unit. EP2175573 A1 describes a method for reducing the signalling amount in selecting a plurality of beams in the pre-coding. WO 2012/152306 A1 relates to arrangements for controlling antennas.

### Summary

The object is to obviate at least some of the problems outlined above. In particular, it is an object to provide a radio base station and a method therein for probing of alternative network configurations at the radio base station, the radio base station employing a first network configuration when serving at least one user equipment, UE, in a wireless communication network. These objects and others may be obtained by providing a radio base station and a method in a radio base station according to the independent claims attached below.

According to an aspect, a method in a radio base station equipped with at least one reconfigurable antenna system having at least two antenna elements for probing of alternative network configurations at the radio base station, the radio base station employing a first network configuration comprising a pilot when serving at least one UE in a wireless communication network is provided. The method comprises determining a second network configuration comprising at least one associated probing pilot and transmitting, at least to the at least one UE, both the at least one probing pilot of the second network configuration and the pilot of the first working network configuration, from the at least one reconfigurable antenna system. The method further comprising transmitting the at least one probing pilot of the second network configuration at an increased or decreased power level compared to the transmission of the pilot of the first working network configuration.

The method further comprises receiving, from at least the at least one UE, reports regarding measurements performed by the at least one UE on both the at least one probing pilot of the second configuration and the pilot of the first working network configuration. Further, the method comprises determining whether to continue employing the first network configuration or to start employing the second network configuration based on the received reports, and employing the determined network configuration.

According to an aspect, a radio base station equipped with at least one reconfigurable antenna system having at least two antenna elements, wherein the radio base station is configured for probing of alternative antenna configurations is provided. The radio base station is employing a first network configuration comprising a pilot when serving at least one UE in a wireless communication network. The radio base station comprises a processing unit adapted to determine a second network configuration comprising at least one associated probing pilot; and a transmitting unit adapted to transmit, at least to the at least one UE, the at least one probing pilot of the second network configuration and the pilot of the first working network configuration, from the at least one reconfigurable antenna. The radio base station further comprising transmitting the at least one probing pilot of the second network configuration at an increased or decreased power level compared to the transmission of the pilot of the first working network configuration. The radio base station further comprises a receiving unit adapted to receive, at least from the at least one UE, reports regarding measurements performed by at least the at least one UE on both the at least one probing pilot of the second configuration and the pilot of the first working network configuration. Further, the processing unit is adapted to determine whether to continue employing the first network configuration or to start employing the second network configuration based on the received reports, and to employ the determined network configuration.

The radio base station and the method therein have several advantages. Alternative network configurations may be tested before they are applied, thereby avoiding applying an alternative network configuration which would result in a reduced capacity or reduced coverage area. A further advantage is that no drive tests are needed. Also, coverage is checked in areas where the actual users are, including indoor and other areas where drive tests are difficult or even impossible due to restricted access. The alternative network configuration is tested on actual mobile spatial usage which ensures that the result of the tested alternative network configuration is accurate. As a result, a further advantage is obtained, namely that service degradation and an increase in number of dropped calls, due to applying a non-tested alternative network configuration, is avoided. Still an advantage is that there is no need to create an additional test cell in order to test the alternative network configuration.

### Brief description of the drawings

Embodiments will now be described in more detail in relation to the accompanying drawings, in which:
Figure 1 is a flowchart of a method for procedure for probing of alternative antenna configurations at a radio base station, according to an exemplifying embodiment.
Figure 2a is a schematic illustration of a minimum scheduling unit comprising two resource blocks RBs with two CSI RS ports, according to an exemplifying embodiment.
Figure 2b is a schematic illustration of a minimum scheduling unit comprising two resource blocks RBs with four CSI RS ports, according to an exemplifying embodiment.
Figure 2c is a schematic illustration of a minimum scheduling unit comprising two resource blocks RBs with eight CSI RS ports, according to an exemplifying embodiment.
Figure 2d is a schematic illustration of a minimum scheduling unit comprising two resource blocks RBs with demodulation reference symbols, DM-RS, and cell-specific reference signals, CRS.
Figure 3a is a block diagram illustrating an example of a reconfigurable antenna system
Figure 3b is an illustration of two network configurations, a probing and a current network configuration.
Figure 4 is a block diagram of a radio base station configured for probing of alternative antenna configurations at a radio base station, according to an exemplifying embodiment.

### Detailed description

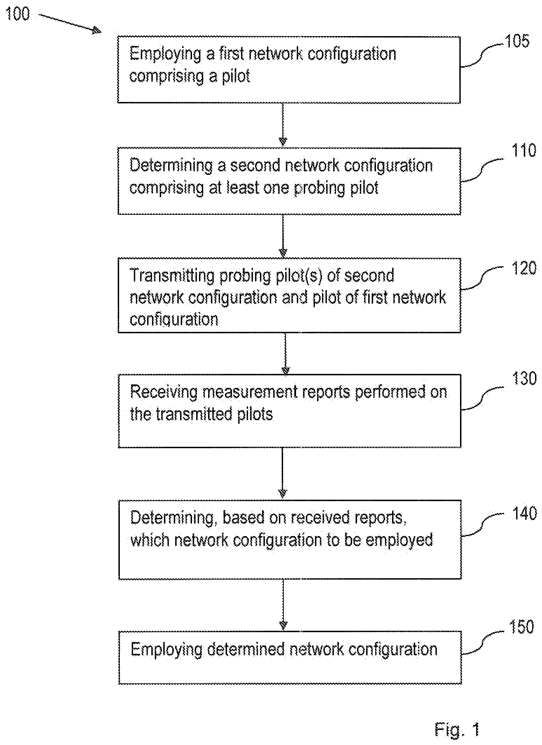

Briefly described, a radio base station and a method therein are provided for probing of alternative antenna configurations at the radio base station. The radio base station is equipped with at least one reconfigurable antenna system having at least two antenna elements for probing of alternative antenna configurations at the radio base station. The radio base station is employing a first network configuration when serving at least one user equipment, UE, in a wireless communication network. Such a method in a radio base station will now be described with reference to figure 1.

Figure 1 is a flowchart of an embodiment of a method for probing of alternative antenna configurations at a radio base station, wherein the radio base station is equipped with at least one reconfigurable antenna system having at least two antenna elements for probing of alternative antenna configurations at the radio base station. The radio base station is employing 105 a first network configuration comprising a pilot when serving at least one UE in a wireless communication network.

Figure 1 illustrates the method 100 in the radio base station comprising determining 110 a second network configuration comprising at least one associated probing pilot and transmitting 120, at least to the at least one UE, both the at least one probing pilot of the second network configuration and the pilot of the first network configuration, from the at least one reconfigurable antenna system. The method further comprises receiving 130, from at least the at least one UE, reports regarding measurements performed by the at least one UE on both the at least one probing pilot of the second configuration and the pilot of the first working network configuration. Further, the method comprises determining 140 whether to continue employing the first network configuration or to start employing the second network configuration based on the received reports, and employing 150 the determined network configuration.

The radio base station in this exemplifying embodiment is currently using or employing a first current network configuration when serving at least one UE. Typically, a radio base station has a coverage area referred to as cell. Within the cell, typically a plurality of UEs are being located and served by the radio base station. When the radio base station is serving the plurality, or at least one, UE, the radio base station employs a network configuration which is referred to as the first or the current network configuration. The network configuration itself and what it entails will be described below. In order to optimise the performance in the network, the radio base station tries out alternative network configurations, either regularly, periodically or on demand. In order to do this, the radio base station first determines 110 a second network configuration comprising at least one associated probing pilot. The second network configuration is the alternative network configuration that the radio base station is to try out. The alternative or second network configuration may also be referred to as a test network configuration.

Once the second network configuration comprising at least one associated probing pilot has been determined, the method comprises transmitting 120 the at least one probing pilot of the second network configuration and transmitting a pilot of the first network configuration to the plurality, or the at least one, UE currently being located in the cell and being served by the radio base station. The at least one probing pilot of the second network configuration and the pilot(s) of the first current network configuration are both sent to the UE(s) from the at least one reconfigurable antenna system of the radio base station. The current network configuration comprises at least one pilot. Hereinafter, the use of a plural "s" in parenthesis, i.e. (s), means at least one.

The UE(s) currently being served by the radio base station performs measurements of both the probing pilot(s) and the pilot(s) of the first current network configuration. The UE(s) then transmits measurement reports relating to the performed measurements of both the probing pilot(s) and the pilot(s) of the first current network configuration.

Thereafter, the method comprises the radio base station receiving 130 these measurement reports relating to both the at least one probing pilot of the second configuration and the pilot of the first working network configuration.

Once the radio base station has received the measurement reports, the method comprises determining 140 whether to continue employing the first network configuration or to start employing the second network configuration based on the received reports, and employing 150 the determined network configuration.

The exemplified embodiment described above has several advantages. Alternative network configurations may be tested before they are applied, thereby avoiding applying an alternative network configuration which would result in a reduced capacity or reduced coverage area. A further advantage is that no drive tests are needed. Also, with this embodiment coverage is checked in areas where the actual users are, including indoor and other areas where drive tests are difficult or even impossible due to restricted access. The alternative network configuration is tested on actual mobile spatial usage which ensures that the result of the tested alternative network configuration is accurate. As a result, a further advantage is obtained, namely that service degradation and an increase in number of dropped calls, due to applying a non-tested alternative network configuration, is avoided. Still an advantage is that there is no need to create an additional test cell in order to test the alternative network configuration.

According to an embodiment, determining 140 the network configuration to be employed by the radio base station comprises transmitting the received measurement reports to an Operation, Administration and Maintenance, OAM, node and receiving from the OAM node, an indication of which network configuration to be employed by the radio base station.

In this embodiment, the intelligence to make the decision on which network configuration to use is implemented in the OAM node. The radio base station may e.g. not be able to evaluate the received measurement reports performed by the at least one UE on both the at least one probing pilot of the second configuration and the pilot of the first working network configuration. Therefore, when the radio base station received the measurement reports from the UE(s), the method comprises transmitting the received measurement reports to the OAM node. The OAM node in turn evaluates the measurement reports and determines which network configuration to use. In other words, the OAM node determined to either keep using or employing the first current network configuration or to switch to start using the tested alternative, i.e. the second, network configuration. Once the OAM node has made a decision, the OAM node transmits the decision, also called an indication, to the radio base station. The radio base station receives the indication and may conclude, based on the indication, which network configuration to be employed by the radio base station, i.e. keep employing the first network configuration or start employ the second network configuration.

According to yet an embodiment, determining 140 which network configuration to be employed by the radio base station comprises comparing, in the radio base station, the received measurement report regarding the probing pilot of the second configuration and the received measurement report regarding the pilot of the first working network configuration.

In this embodiment, the intelligence to make the decision on which network configuration to use is implemented in the radio base station. The method comprises the radio base station itself evaluating the measurement reports received from the UE(s) by comparing the received measurement report regarding the probing pilot of the second configuration and the received measurement report regarding the pilot of the first working network configuration. Based on the evaluation or comparison, the radio base station determines which network configuration to be employed by the radio base station, i.e. keep employing the first network configuration or switch to start employing the second network configuration.

According to still an embodiment, determining 140 whether to continue employing the first network configuration or to start employing the second network configuration comprises selecting the network configuration with the best overall network performance and maintained coverage, as indicated by the measurement reports from the at least one UE.

The measurement reports regarding the probing pilot of the second configuration and the received measurement report regarding the pilot of the first network configuration may e.g. show that the alternative network configuration, i.e. the second network configuration, will improve capacity but with degraded coverage. Alternatively, the measurement reports may e.g. show that the capacity is kept constant but the coverage will be improved by the second network configuration. In other words, there is not just one aspect of overall network performance to consider and the second network configuration may improve certain aspects of the of overall network performance, degrade other aspect and not have an effect on still other aspects in conjunction with coverage of the radio base station.

Some examples of network performance are capacity, spectrum efficiency, user bit rate, average Signal to Interference and Noise Ratio, SINR, channel quality, and transmission rank in Multiple Input Multiple Output, MIMO transmission.

According to an embodiment, the at least one probing pilot of the second network configuration comprises an antenna port having own reference signals.

The probing pilot(s) of the second network configuration and the pilot(s) of the first network configuration are transmitted to the UE(s) currently being served by the radio base station. This means that the probe pilot(s) of the second network configuration and the pilot(s) of the first network configuration should be separated. They may be separated in time (Time Division Multiplex, TDM), frequency (Frequency Division Multiplex, FDM) or by code (Code Division Multiplex, CDM) depending on which Radio Access Technology, RAT, is employed.

In Long Term Evolution, LTE, a number of antenna ports with own reference symbols are defined. The UE(s) perform measurements on these reference symbols. An antenna port may be transmitted over several physical antennas.

An antenna port is defined such that the channel over which a symbol on the antenna port is conveyed may be inferred from the channel over which another symbol on the same antenna port is conveyed. There is one resource grid per antenna port. The set of antenna ports supported depends on the reference signal configuration in the cell.

Cell-specific reference signals, CRSs, support a configuration of one, two, or four antenna ports and are e.g. transmitted on antenna ports p=0, p∈ {0, 1}, and, p∈ {0,1,2,3}, respectively.

According to an embodiment, the at least one probing pilot of the second network configuration comprises at least one Channel State Information Reference Symbol, CSI RS, port.

In this embodiment, the CSI RSs are used. The CSI RSs support a configuration of one, two, four or eight antenna ports and are e.g. transmitted on antenna ports p-15, p=15, 16, p=15,...,18 and p=15,...,22 respectively.

According to an embodiment, the at least one probing pilot of the second network configuration comprises at least one UE specific reference symbol.

UE-specific reference signals, RS, are e.g. transmitted on antenna port(s) p=5, p=7, p=8 or one or several of p∈ {7,8,9,10,11,12,13,14}.

Further, there are also positioning reference symbols which are e.g. transmitted on antenna port p=6 and Multimedia Broadcast over Single Frequency Network, MBSFN, reference signals are transmitted on antenna port p=4.

One of these ports may be used for probe pilot. Depending on which antenna port that is used, different reference symbols are used as probe pilot. The use of one of these ports implies a reduced number of transmission layers (CRS, CSI-RS or UE specific RS) or for feature antenna ports not used (MBSFN or positioning). In another example, different combinations of the CRS, CSI-RS and UE specific RS are used maintaining the number of transmission layers.

According to an embodiment, the at least one probing pilot of the second network configuration comprises a specific pilot customised for the purpose of probing of alternative antenna configurations at the radio base station.

In this embodiment, a specific probing pilot is defined and used by the radio base station for probing of alternative antenna configurations. This implies a rather small bandwidth cost. One way to define a specific probing pilot is to define a new antenna port with a sparse RS pattern using quite few symbols per Transmission Time Interval, TTI, or even not event at every TTI. The measurements performed by the UE(s) becomes more accurate and better the longer the measurements are ongoing, e.g. the mobile spatial distribution is more accurately determined. The accuracy of the measurement will be good enough also with very few sparse probing pilots.

In LTE, a process called antenna mapping jointly processes modulation symbols corresponding to one or two transport blocks and maps the result to different antenna ports. The antenna mapping may be configured in different ways corresponding to different multi-antenna transmission schemes, including transmit diversity, beam-forming and spatial multiplexing. LTE supports transmission using up to eight antenna ports depending in the exact multi-antenna transmission scheme. The antenna ports do not necessarily correspond to specific physical antennas. Rather, an antenna port is a more general concept introduced e.g. to allow for beam-forming using multiple physical antennas without the UE being aware of the beam-forming carried out at the radio base station.

An antenna port may be seen as corresponding to the transmission of a reference signal. Any data transmission from the antenna port may then rely on that reference signal for channel estimation for coherent demodulation. Thus, if the same reference signal is transmitted from multiple physical antennas, these physical antennas correspond to a single antenna port. Similarly, if two different reference signals are transmitted from the same set of physical antennas, this corresponds to two separate antenna ports.

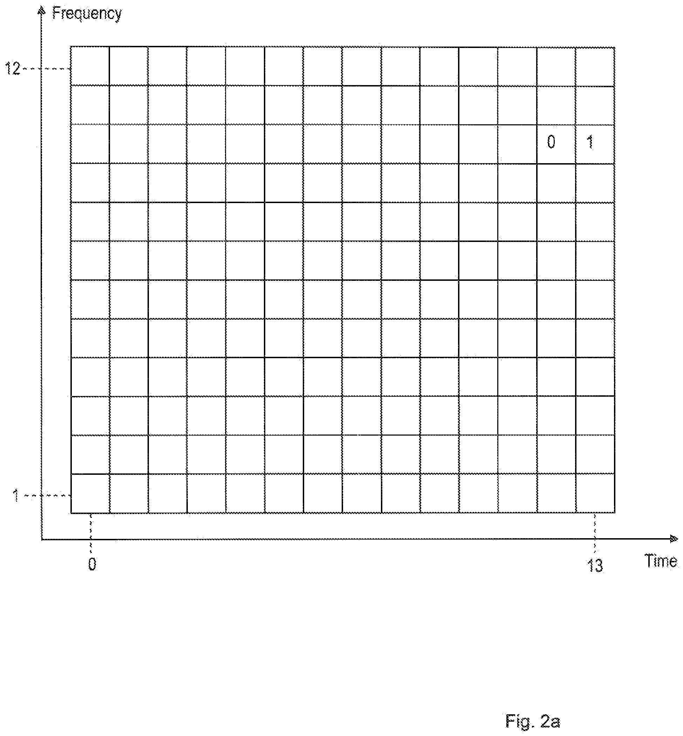

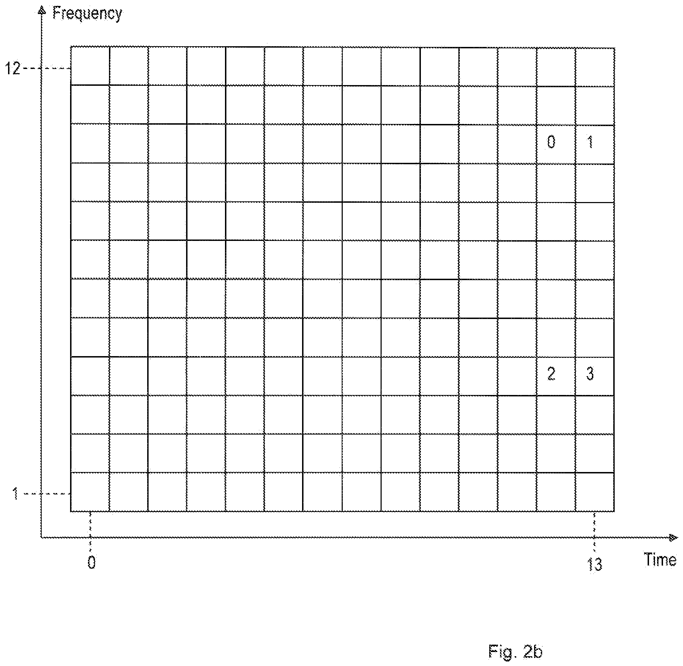

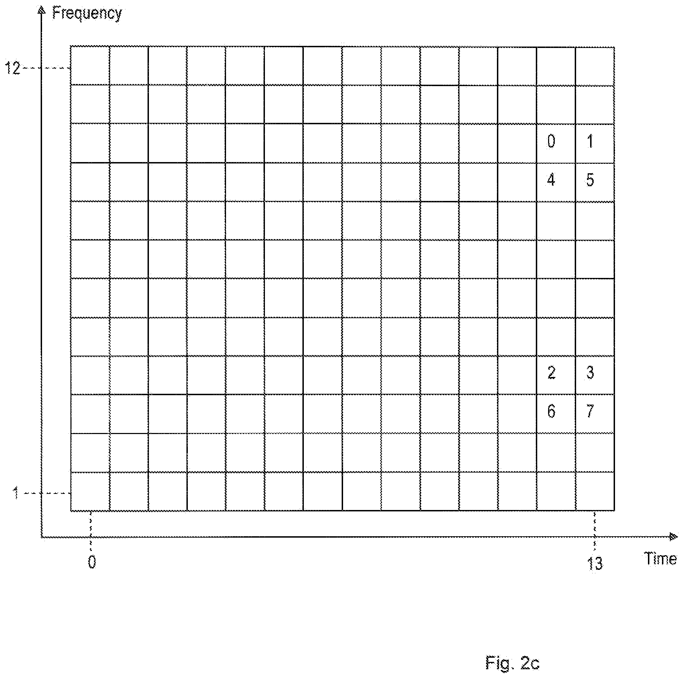

Figures 2a, 2b and 2c are schematic illustrations of a minimum scheduling unit comprising two resource blocks RBs with different number of CSI RS ports.

One single resource block comprises one slot which is 0.5 ms long and comprises twelve subcarriers. Consequently, a minimum scheduling unit is one ms long (two slots) and comprises twelve subcarriers. The scheduling unit comprises 14^{∗}12=168 resource elements, REs, wherein one RE is capable of carrying one reference symbol. Typically, one scheduling unit comprises a plurality of reference symbols.

As explained above, the reference signals are used by the UE(s) for demodulation and to measure different parameters. The measuring is e.g. performed by the UE(s) with a periodicity of five subframes and there is one RE per antenna port and the RBs are e.g. punctured into the Physical Downlink Shared Channel, PDSCH. There may be two, four, or eight CSI RS ports. The reuse factor may be kept high through subframe offset, intra-subframe Orthogonal Frequency-Division Multiplexing, OFDM, symbol shift and frequency shift.

Figure 2a is a schematic illustration of a minimum scheduling unit comprising two resource blocks RBs with two CSI RS ports.

Figure 2b is a schematic illustration of a minimum scheduling unit comprising two resource blocks RBs with four CSI RS ports.

Figure 2c is a schematic illustration of a minimum scheduling unit comprising two resource blocks RBs with eight CSI RS ports.

If measurements for one layer are temporarily suspended, a test reference symbol may be sent on the RE of the corresponding antenna port. Alternatively, the CSI RS are sent at most every fifth subframe, thus all antenna ports could potentially be used with the second network configuration when it is not necessary to send the probe(s) of the first network configuration in a subframe. Doing so would allow for rank estimation.

Again with reference to LTE, specific demodulation reference symbols, DM-RS, are specified. The DM-RS are an example of UE specific RS. The DM-RS are sent when data is transmitted on the PDSCH where the UE is receiving data. There is not always data to send to each UE each slot and at these instances this DM-RS may be configured according to the second configuration. At least a subset of the UE(s) being served by the radio base station is then configured to measure on these DM-RS. For the UE to measure on this DM-RS the ordinary way a transmission must take place addressing the specific UE. This transmission may be done filling the user data field with dummy data or transmitting a specific RRC message related to the alternative measurement.

If not all UEs currently being served are chosen to perform the measurements, i.e. only a subset of UEs are chosen, the selection of the UEs are in one example randomly picked for as long time it is needed until a satisfying statistical sample has been reached, e.g. enough samples are collected to be considered statistically confident.

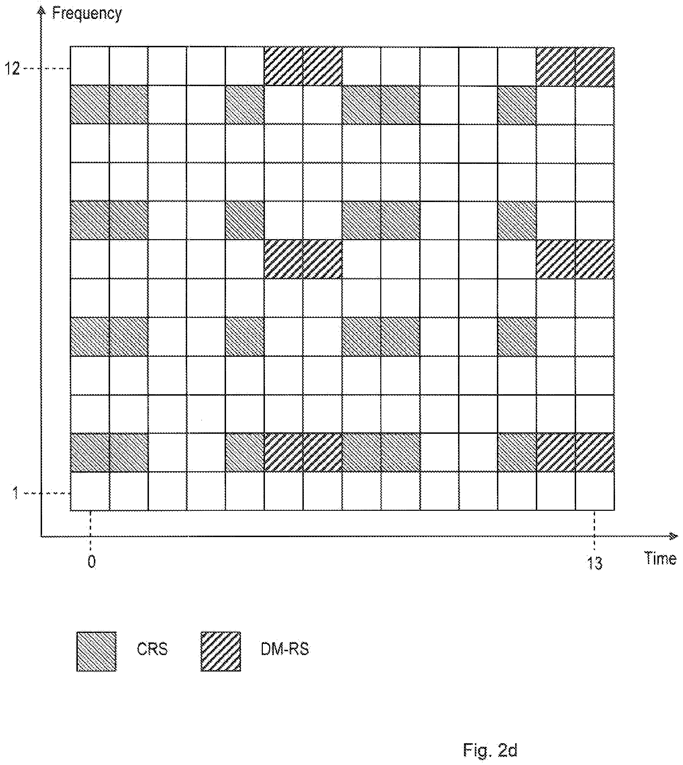

Figure 2d is a schematic illustration of a minimum scheduling unit comprising two resource blocks RBs with DM-RS and CRS.

Gaps in transmissions may occur e.g. due to there temporarily being no more data to be sent. Such gaps are also referred to as Discontinuous Transmission, DTX, During such a gap, the UE specific RS of the first, current network configuration is in one example reconfigured to the second, alternative, network configuration. In this example, a dummy transmission is performed by the radio base station for measurement purposes. Such a scheme may be used primarily during periods when the communication system is not heavily loaded because the dummy transmission will occupy resources and it will also contribute to inter-cell interference. In another example, the probing pilot(s) of the second network configuration is sent on a Packet Data Control Channel, PDCCH.

According to an embodiment, determining a second network configuration involves more than one radio base station or probing of alternative network configurations relates to configurations of more than one probing pilot.

In this embodiment, the radio base station communicates with its neighbouring radio base stations. Typically, a radio base station has a plurality of neighbouring radio base stations. In this embodiment, the radio base station communicates with at least one of its neighbouring radio base stations whereby the radio base station and the at least one of its neighbouring radio base stations exchange information which are used when the radio base station determines the second network configuration comprising the at least one associated probing pilot. Alternatively, the radio base stations communicate with an OAM node that determines a second network configuration involving more than one base station. The second network configuration may also comprise more than one probing pilot. For example one radio base station controls several cells and determines a second network configuration involving more than one cell.

According to yet an embodiment, the probing of alternative network configurations at the radio base station relates to transmission power level reconfiguration, wherein the method comprises transmitting the at least one probing pilot of the second network configuration at an increased or decreased power level compared to the transmission of the pilot of the first working network configuration.

This embodiment enables the radio base station to determine a transmission power level that is high enough to support communication with the UE(s) currently being served by the base station, which at the same time is low enough not to waste energy by employing too high a transmission power. This embodiment also enables the radio base station to possibly serve additional UEs if the transmission power level is increased.

According to still an embodiment, the alternative network configurations at the radio base station are at least one of antenna tilt, beam pointing direction in azimuth, beam width in azimuth and beam width in elevation.

Antenna parameters may be changed in a variety of ways with reconfigurable antennas.

According to an embodiment, the alternative network RS configuration is implemented by beam forming in the frequency domain.

In this embodiment, the reconfigurable antenna system of the radio base station comprises an array antenna. An array antenna and beam forming implemented in the frequency domain enables beam forming to be done per RE basis. Not only direction and width may be changed, but also the shape, i.e. specific antenna patterns.

In general, if some knowledge of the downlink channels of the different transmit antennas is available at the transmitter side, multiple transmit antennas may provide beam forming. Beam forming means shaping of the overall antenna beam in the direction of target receivers. Such beam forming may increase the signal strength at the receivers.

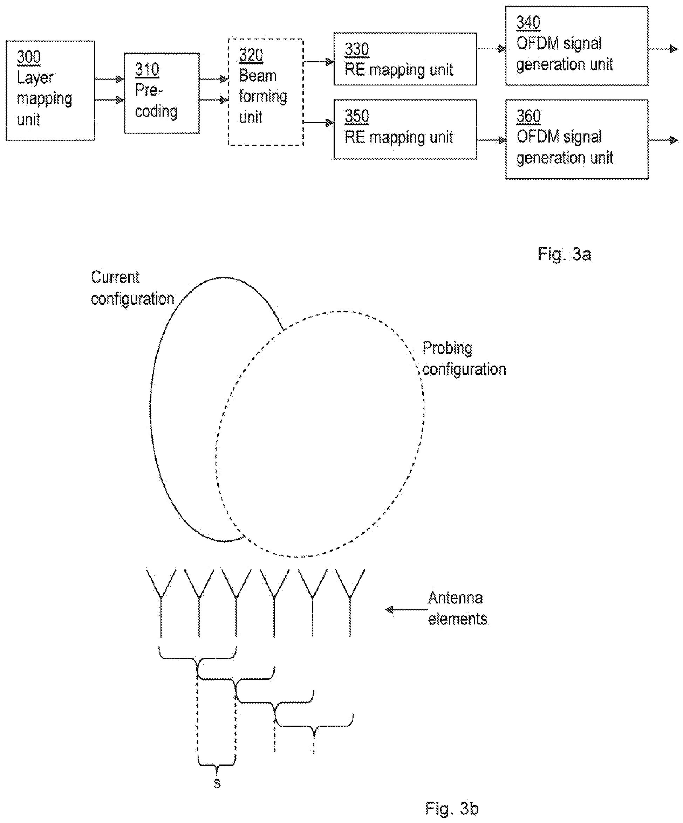

Figure 3a is a block diagram illustrating an example of a reconfigurable antenna system and figure 3b illustrates an antenna array for a reconfigurable antenna system.

Figure 3a illustrates the reconfigurable antenna system comprising a layer mapping unit 300. The layer mapping unit 300 is adapted to map complex-valued modulation symbols onto one or several transmission layers. Thereafter, the layer mapping unit 300 forwards the mapped symbols to a pre-coding unit 310. The pre-coding unit 310 is adapted to pre-code the complex-valued modulation symbols on each layer for transmission on the antenna ports and to forward the pre-coded symbols to a beam forming unit 320. The beam forming unit 320 is may comprise different separate units. The beam forming unit 320 may communicate with other units or modules outside the reconfigurable antenna system. In order to illustrate that the beam forming unit 320 may be complex, it is illustrated by a dashed box. The beam forming unit 320 is further adapted to, use unique beam forming vectors on the symbols corresponding to the first and the second network configuration respectively. This beam forming maps antenna ports to element ports of the array antenna as shown in figure 3b. The beam forming unit 320 is further adapted to forward the pre-coded and beam formed modulation symbols to RE mapping units 330 and 350. The RE mapping units 330 and 350 is adapted to map the pre-coded and beam formed modulation symbols to resource elements for each antenna element and to forwards the forward the mapped pre-coded and beam formed modulation symbols to OFDM signal generation units 340 and 360 which are adapted to generate a complex-valued time domain OFDM signal for each antenna port and to transmit these OFDM signals to the at least one UE.

Figure 3b illustrates an example of an antenna array for a reconfigurable antenna system. In this example, the antenna system comprises six antenna elements. The first network configuration, which is the current network configuration has a first beam form, which is illustrated as approximately an oval oriented in a first direction. The alternative network configuration has a second beam form, which is illustrated by a dashed oval oriented in a second direction and also a second beam-width. Figure 3b also illustrates the antenna elements being spaced apart at an equal distance and the spacing, s, between the phase centres for the antenna ports corresponding to first and second network configurations are the same as the physical elements. The current and the probing network configurations may be applied to subgroups of antenna elements and subgroups may be overlapping or unique parts of the antenna array. Further, if the number of antenna elements is sufficient, the spacing between the virtual antenna elements may be different for the different network configurations.

According to an embodiment, the alternative network configurations at the radio base station are at least one of polarization forming and beam shaping.

In this example, it is possible to, by means of a dual polarized antenna array, applying weights such that the polarization of the transmitted signal is defined on a per RE basis.

According to still an embodiment, the measurement report regarding at least the at least one probing pilot of the second configuration received from the at least one UE is received by means of CSI reporting or Radio Resource Control, RRC, reporting. As an example, the radio base station may configure the UE(s) to report on n+1 CSI-RSs, where n is the number of ports that may be used for regular operation and/or for the first network configuration and on the additional CSI-RS the new or second configuration may be applied. Then, the UE(s) will measure and report CSI feedback and the network e.g. the radio base station or the OAM may directly compare the existing configuration with the new one i.e. compare the reports of the first and second network configurations.

It is important that the UE is able to distinguish between the pilot(s) of the first network configuration and the probing pilot(s) of the alternative network configuration in order to avoid combining and averaging over different configurations of the system. It is also important that the measurements from the two alternatives may be received at the base station requiring reporting from the UE supporting this. This may be achieved by using CSI reporting. There are nine different downlink MIMO modes and correspondingly nine different related CSI modes. The CSI modes differ in terms of reporting channel, frequency granularity and Pre-coding Matrix Indicator, PMI, granularity.

Coordinated MultiPoint, CoMP, is a technique being extensively discussed within the context of LTE-Advanced. One reporting method is that the UE, in addition to CSI to connected cell, reports CSI for a number of strongest neighbour cell CSI-RS, CSI-RS may then be borrowed from a neighbour cell to create a probe. Since the probe is close to the original transmission it will be strong in own cell it will most likely be reported.

If e.g. the RRC reporting is used by the UE(s) for reporting the measurements performed by the UE(s) on the different pilots of the first and the second network configuration, a specific or tailored reporting is used with good observability at a limited overhead. The reporting by the UE is in one example event driven as existing Radio Resource Management reports. In order to reduce reporting overhead, aggregation for longer periods may e.g. be performed. In another example, the reporting is done by polling the UE(s). By polling the UE measurements, battery cost at the UE is reduced as compared to active measurements.

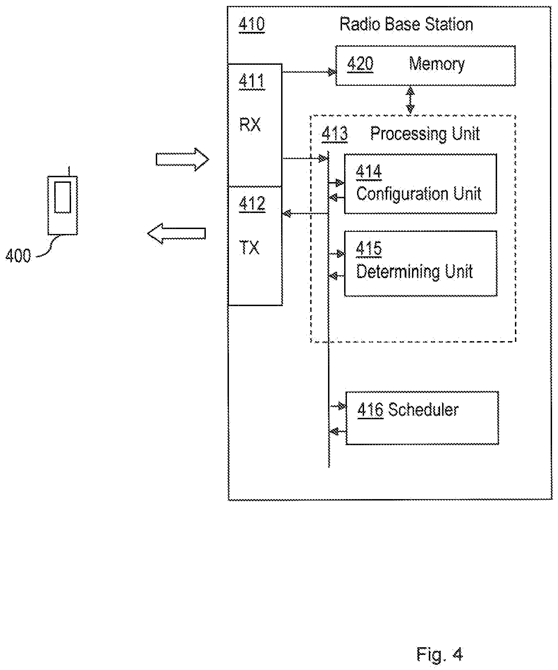

Embodiments herein also relate to a radio base station equipped with at least one reconfigurable antenna system having at least two antenna elements, wherein the radio base station is configured for probing of alternative antenna configurations. The radio base station is employing a first network configuration when serving at least one UE in a wireless communication network. Such a radio base station will now be described with reference to figure 4. The radio base station has the same objects, technical features and advantages as the above described method therein. The radio base station will therefore only be described in brief in order to avoid unnecessary repetition.

Figure 4 illustrates the radio base station comprising a processing unit 413 adapted to determine a second network configuration comprising at least one associated probing pilot; and a transmitting unit 412 adapted to transmit, at least to the at least one UE, the at least one probing pilot of the second network configuration and a pilot of a first working network configuration, from the at least one reconfigurable antenna. The radio base station further comprises a receiving unit 411 adapted to receive, at least from the at least one UE, reports regarding measurements performed by at least the at least one UE on both the at least one probing pilot of the second configuration and the pilot of the first working network configuration. Further, the processing unit 413 is adapted to determine whether to continue employing the first network configuration or to start employing the second network configuration based on the received reports, and to employ the determined network

Figure 4 illustrates the radio base station 410 comprising the processing unit 413, wherein the processing unit 413 comprises a configuration unit 414 and a determining unit 415. The different units 415 and 415 may e.g. be adapted to perform the different tasks of the processing unit 413. Figure 4 illustrates the radio base station 410 comprising a transmitting unit 412 and a receiving unit 411 by means of which the radio base station communication with at least one UE 400 over a radio interface. The transmitting unit 412 and the receiving unit 411 comprise the antenna system (not shown) or are connected to the antenna system. Figure 4 further illustrates the radio base station 410 comprising a scheduler 416 for scheduling uplink and downlink transmissions to and from the radio base station 410.

According to an embodiment, the processing unit 413 is adapted to determine which network configuration to be employed by the radio base station by transmitting the received measurement reports to an OAM node and receiving from the OAM node, an indication of which network configuration to be employed by the radio base station.

According to still an embodiment, the processing unit 413 is adapted to determine which network configuration to be employed by the radio base station by comparing, in the radio base station, the received measurement report regarding the at least one probing pilot of the second configuration and the received measurement report regarding the pilot of the first working network configuration.

According to yet an embodiment, the processing unit 413 is adapted to determine which network configuration to be employed by the radio base station by selecting the network configuration with the best overall network performance and maintained coverage, as indicated by the measurement reports from the at least one UE.

According to an embodiment, the at least one probing pilot of the second network configuration comprises an antenna port having own reference symbols.

According to an embodiment, the at least one probing pilot of the second network configuration comprises at least one Channel State information Reference Symbol, CSI RS, port.

According to yet an embodiment, the at least one probing pilot of the second network configuration comprises at least one UE specific reference symbol.

According to still an embodiment, the at least one probing pilot of the second network configuration comprises a specific pilot customised for the purpose of probing of alternative antenna configurations at the radio base station.

According to an embodiment, the processing unit 413 is adapted to determine the second network configuration in cooperation with at least one further radio base station or wherein an alternative network configuration comprises more than one probing pilot.

According to an embodiment, the probing of alternative network configurations at the radio base station relates to transmission power level reconfiguration, wherein the transmitting unit 412 is adapted to transmit the probing pilot of the second network configuration at an increased or decreased power level compared to the transmission of the pilot of the first working network configuration.

According to yet an embodiment, the alternative network configurations at the radio base station are at least one of antenna tilt, beam pointing direction, beam width in azimuth and beam width in elevation.

According to yet an embodiment, the radio base station is adapted to implement the alternative network configurations by beam forming in the frequency domain,

According to yet an embodiment, the alternative network configurations at the radio base station are at least one of polarization forming and beam shaping.

According to still an embodiment, the measurement report regarding at least the at least one probing pilot of the second configuration received from the at least one UE is received by means of CSI reporting or RRC reporting.

It should be noted that figure 4 merely illustrates various functional units in the radio base station in a logical sense. The functions in practice may be implemented using any suitable software and hardware means/circuits etc. Thus, the embodiments are generally not limited to the shown structures of the radio base station and the functional units. Hence, the previously described exemplary embodiments may be realised in many ways. For example, one embodiment includes a computer-readable medium having instructions stored thereon that are executable by the processing unit for executing the method. The instructions executable by the computing system and stored on the computer-readable medium perform the method steps of the present invention as set forth in the claims.

While the embodiments have been described in terms of several embodiments, it is contemplated that alternatives, modifications, permutations and equivalents thereof will become apparent upon reading of the specifications and study of the drawings. It is therefore intended that the following appended claims include such alternatives, modifications, permutations and equivalents as fall within the scope of the embodiments and defined by the pending claims.

## Claims

1. A method (100) in a radio base station (410) equipped with at least one reconfigurable antenna system having at least two antenna elements for probing of alternative network configurations at the radio base station (410), the radio base station (410) employing (105) a first network configuration comprising a pilot when serving at least one user equipment, UE, (400) in a wireless communication network, the method (100) comprising:
- determining (110) a second network configuration comprising at least one probing pilot,
- transmitting (120), at least to the at least one UE (400), the at least one probing pilot of the second network configuration and the pilot of the first network configuration, from the at least one reconfigurable antenna system, wherein the transmitting (120) comprises transmitting the at least one probing pilot of the second network configuration at an increased or decreased power level compared to the transmission of the pilot of the first network configuration,
- receiving (130), from the at least one UE (400), measurement reports regarding measurements performed by at least the at least one UE (400) on both the at least one probing pilot of the second network configuration and the pilot of the first network configuration,
- determining (140) whether to continue employing the first network configuration or to start employing the second network configuration based on the received measurement reports, and
- employing (150) said determined network configuration.

2. The method (100) according to claim 1, wherein determining (140) the network configuration to be employed by the radio base station (410) comprises:
transmitting the received measurement reports to an Operation, Administration and Maintenance, OAM, node, and
receiving, from said OAM node, an indication of which network configuration is to be employed by the radio base station (410).

3. The method (100) according to claim 1, wherein determining (140) which network configuration is to be employed by the radio base station (410) comprises comparing, in the radio base station (410), the received measurement report regarding the at least one probing pilot of the second network configuration and the received measurement report regarding the pilot of the first network configuration.

4. The method (100) according to claim 3, wherein determining (140) whether to continue employing the first network configuration or to start employing the second network configuration comprises selecting a network configuration with the best overall network performance and maintained coverage as indicated by the measurement reports received from the at least one UE (400).

5. The method (100) according to any of claims 1-4, wherein the at least one probing pilot of the second network configuration comprises: an antenna port having own reference symbols; at least one Channel State Information Reference Symbol, CSI RS, port; or at least one UE specific reference symbol.

6. The method (100) according to any of claims 1-5, wherein the alternative network configurations at the radio base station (410) are at least one of: antenna tilt, beam pointing direction, beam width in azimuth, and beam width in elevation.

7. The method (100) according to any of claims 1-5, wherein the measurement report regarding at least the at least one probing pilot of the second network configuration, received from the at least one UE (400), is received by means of CSI reporting or Radio Resource Control, RRC, reporting.

8. A radio base station (410), equipped with at least one reconfigurable antenna system having at least two antenna elements, the radio base station (410) being configured for probing of alternative antenna configurations, the radio base station (410) employing a first network configuration comprising a pilot when serving at least one user equipment (400), UE, in a wireless communication network, the radio base station (410) comprising:
- a processing unit (413) adapted to determine a second network configuration comprising at least one probing pilot,
- a transmitting unit (412) adapted to transmit, at least to the at least one UE (400), the at least one probing pilot of the second network configuration and the pilot of the first network configuration, from the at least one reconfigurable antenna, wherein the transmitting unit (412) is adapted to transmit the at least one probing pilot of the second network configuration at an increased or decreased power level compared to the transmission of the pilot of the first network configuration, and
- a receiving unit (411) adapted to receive, from at least the at least one UE (400), measurement reports regarding measurements performed by the at least one UE (400) on both the at least one probing pilot of the second network configuration and the pilot of the first working network configuration, wherein
the processing unit (413) is further adapted to determine whether to continue employing the first network configuration or to start employing the second network configuration based on the received measurement reports, and to employ said determined network configuration.

9. The radio base station (410) according to claim 8, wherein the processing unit (413) is adapted to determine which network configuration to be employed by the radio base station (410) by:
transmitting the received measurement reports to an Operation, Administration and Maintenance, OAM, node, and
receiving, from said OAM node, an indication of which network configuration is to be employed by the radio base station (410).

10. The radio base station (410) according to claim 8, wherein the processing unit (413) is adapted to determine which network configuration is to be employed by the radio base station (410) by comparing, in the radio base station (410), the received measurement report regarding the at least one probing pilot of the second network configuration and the received measurement report regarding the pilot of the first network configuration.

11. The radio base station (410) according to claim 10, wherein the processing unit (413) is adapted to determine which network configuration to be employed by the radio base station (410) by selecting a network configuration with the best overall network performance and maintained coverage as indicated by the measurement reports received from the at least one UE (400).

12. The radio base station (410) according to any of claims 8-10, wherein the at least one probing pilot of the second network configuration comprises: an antenna port having own reference symbols; at least one Channel State Information Reference Symbol, CSI RS, port; or at least one UE specific reference symbol.

13. The radio base station (410) according to any of claims 8-12, wherein the alternative network configurations at the radio base station (410) are at least one of: antenna tilt, beam pointing direction, beam width in azimuth, and beam width in elevation, and wherein the measurement report regarding at least the at least one probing pilot of the second network configuration, received from the at least one UE (400), is received by means of CSI reporting or Radio Resource Control, RRC, reporting.

## Patentansprüche

1. Verfahren (100) in einer Funkbasisstation (410), die mit mindestens einem rekonfigurierbaren Antennensystem mit mindestens zwei Antennenelementen zum Sondieren nach alternativen Netzkonfigurationen an der Funkbasisstation (410) ausgerüstet ist, wobei die Funkbasisstation (410) eine erste Netzkonfiguration einsetzt (105), die einen Piloten umfasst, wenn mindestens ein Benutzergerät (UE) (400) in einem drahtlosen Kommunikationsnetz bedient wird, wobei das Verfahren (100) umfasst:
- Bestimmen (110) einer zweiten Netzkonfiguration, die mindestens einen Sondierungspiloten umfasst,
- Übertragen (120), mindestens an das mindestens eine UE (400), des mindestens einen Sondierungspiloten der zweiten Netzkonfiguration und des Piloten der ersten Netzkonfiguration von dem mindestens einen rekonfigurierbaren Antennensystem, wobei das Übertragen (120) das Übertragen des mindestens einen Sondierungspiloten der zweiten Netzkonfiguration mit einem erhöhten oder einem verringerten Leistungsniveau im Vergleich mit der Übertragung des Piloten der ersten Netzkonfiguration umfasst,
- Empfangen (130), von dem mindestens einen UE (400), von Messberichten bezüglich Messungen, die durch mindestens das mindestens eine UE (400) bei sowohl dem mindestens einen Sondierungspiloten der zweiten Netzkonfiguration als auch dem Piloten der ersten Netzkonfiguration durchgeführt werden,
- Bestimmen (140) auf Grundlage der empfangenen Messberichte, ob weiterhin die erste Netzkonfiguration eingesetzt wird oder begonnen werden soll, die zweite Netzkonfiguration einzusetzen, und
- Einsetzen (150) der bestimmten Netzkonfiguration.

2. Verfahren (100) nach Anspruch 1, wobei das Bestimmen (140) der Netzkonfiguration, die durch die Funkbasisstation (410) eingesetzt werden soll, umfasst:
Übertragen der empfangenen Messberichte an einen Betriebs-, Verwaltungs- und Wartungsknoten (OAM-Knoten), und
Empfangen, von dem OAM-Knoten, einer Angabe, welche Netzkonfiguration durch die Funkbasisstation (410) eingesetzt werden soll.

3. Verfahren (100) nach Anspruch 1, wobei das Bestimmen (140), welche Netzkonfiguration durch die Funkbasisstation (410) eingesetzt werden soll, das Vergleichen des empfangenen Messberichts bezüglich des mindestens einen Sondierungspiloten der zweiten Netzkonfiguration und des empfangenen Messberichts bezüglich des Piloten der ersten Netzkonfiguration in der Funkbasisstation (410) umfasst.

4. Verfahren (100) nach Anspruch 3, wobei das Bestimmen (140), ob weiterhin die erste Netzkonfiguration eingesetzt wird oder begonnen werden soll, die zweite Netzkonfiguration einzusetzen, das Auswählen einer Netzkonfiguration mit der besten Gesamtnetzleistung und aufrechterhaltenen Abdeckung, wie sie durch die von dem mindestens einen UE (400) empfangenen Messberichte angegeben wird, umfasst.

5. Verfahren (100) nach einem der Ansprüche 1-4, wobei der mindestens eine Sondierungspilot der zweiten Netzkonfiguration umfasst: einen Antennenanschluss mit eigenen Referenzsymbolen; mindestens einen Kanalstatusinformationen-Referenzsymbol-Anschluss (CSI-RS-Anschluss); oder mindestens ein UE-spezifisches Referenzsymbol.

6. Verfahren (100) nach einem der Ansprüche 1-5, wobei die alternativen Netzkonfigurationen an der Funkbasisstation (410) mindestens eines von Antennenneigung, Strahlausrichtungsrichtung, Strahlbreite in Azimut und Strahlbreite in Elevation sind.

7. Verfahren (100) nach einem der Ansprüche 1-5, wobei der Messbericht bezüglich mindestens des mindestens einen Sondierungspiloten der zweiten Netzkonfiguration, der von dem mindestens einen UE (400) empfangen wird, durch Mittel von CSI-Meldung oder Funkressourcensteuerungs-Meldung (RRC-Meldung) empfangen wird.

8. Funkbasisstation (410), die mit mindestens einem rekonfigurierbaren Antennensystem mit mindestens zwei Antennenelementen ausgerüstet ist, wobei die Funkbasisstation (410) zum Sondieren nach alternativen Antennenkonfigurationen konfiguriert ist, wobei die Funkbasisstation (410) eine erste Netzkonfiguration, die einen Piloten umfasst, einsetzt, wenn sie mindestens ein Benutzergerät (UE) (400) in einem drahtlosen Kommunikationsnetz bedient, wobei die Funkbasisstation (410) umfasst:
- eine Verarbeitungseinheit (413), die dazu angepasst ist, eine zweite Netzkonfiguration zu bestimmen, die mindestens einen Sondierungspiloten umfasst,
- eine Übertragungseinheit (412), die dazu angepasst ist, von der mindestens einen rekonfigurierbaren Antenne den mindestens einen Sondierungspiloten der zweiten Netzkonfiguration und den Piloten der ersten Netzkonfiguration mindestens an das mindestens eine UE (400) zu übertragen, wobei die Übertragungseinheit (412) dazu angepasst ist, den mindestens einen Sondierungspiloten der zweiten Netzkonfiguration mit einem erhöhten oder einem verringerten Leistungsniveau im Vergleich mit der Übertragung des Piloten der ersten Netzkonfiguration zu übertragen, und
- eine Empfangseinheit (411), die dazu angepasst ist, Messberichte bezüglich Messungen, die durch das mindestens eine UE (400) bei sowohl dem mindestens einen Sondierungspiloten der zweiten Netzkonfiguration als auch dem Piloten der ersten Netzkonfiguration durchgeführt werden, von mindestens dem mindestens einen UE (400) zu empfangen, wobei
die Verarbeitungseinheit (413) ferner dazu angepasst ist, auf Grundlage der empfangenen Messberichte zu bestimmen, ob weiterhin die erste Netzkonfiguration eingesetzt wird oder begonnen werden soll, die zweite Netzkonfiguration einzusetzen, und die bestimmte Netzkonfiguration einzusetzen.

9. Funkbasisstation (410) nach Anspruch 8, wobei die Verarbeitungseinheit (413) dazu angepasst ist, durch Folgendes zu bestimmen, welche Netzkonfiguration durch die Funkbasisstation (410) eingesetzt werden soll:
Übertragen der empfangenen Messberichte an einen Betriebs-, Verwaltungs- und Wartungsknoten (OAM-Knoten), und
Empfangen, von dem OAM-Knoten, einer Angabe, welche Netzkonfiguration durch die Funkbasisstation (410) eingesetzt werden soll.

10. Funkbasisstation (410) nach Anspruch 8, wobei die Verarbeitungseinheit (413) dazu angepasst ist, durch Vergleichen des empfangenen Messberichts bezüglich des mindestens einen Sondierungspiloten der zweiten Netzkonfiguration und des empfangenen Messberichts bezüglich des Piloten der ersten Netzkonfiguration in der Funkbasisstation (410) zu bestimmen, welche Netzkonfiguration durch die Funkbasisstation (410) eingesetzt werden soll.

11. Funkbasisstation (410) nach Anspruch 10, wobei die Verarbeitungseinheit (413) dazu angepasst ist, durch Auswählen einer Netzkonfiguration mit der besten Gesamtnetzleistung und aufrechterhaltenen Abdeckung, wie sie durch die von dem mindestens einen UE (400) empfangenen Messberichte angegeben wird, zu bestimmen, welche Netzkonfiguration durch die Funkbasisstation (410) eingesetzt werden soll.

12. Funkbasisstation (410) nach einem der Ansprüche 8-10, wobei der mindestens eine Sondierungspilot der zweiten Netzkonfiguration umfasst: einen Antennenanschluss mit eigenen Referenzsymbolen; mindestens einen Kanalstatusinformationen-Referenzsymbol-Anschluss (CSI-RS-Anschluss); oder mindestens ein UE-spezifisches Referenzsymbol.

13. Funkbasisstation (410) nach einem der Ansprüche 8-12, wobei die alternativen Netzkonfigurationen an der Funkbasisstation (410) mindestens eines von Antennenneigung, Strahlausrichtungsrichtung, Strahlbreite in Azimut und Strahlbreite in Elevation sind und wobei der Messbericht bezüglich mindestens des mindestens einen Sondierungspiloten der zweiten Netzkonfiguration, der von dem mindestens einen UE (400) empfangen wird, durch Mittel von CSI-Meldung oder Funkressourcensteuerungs-Meldung (RRC-Meldung) empfangen wird.

## Revendications

1. Procédé (100) dans une station de base radio (410) équipée d'au moins un système d'antenne reconfigurable comportant au moins deux éléments d'antenne pour le sondage de configurations de réseau alternatives au niveau de la station de base radio (410), la station de base radio (410) employant (105) une première configuration de réseau comprenant un pilote quand elle dessert au moins un équipement utilisateur, UE, (400) dans un réseau de communication sans fil, le procédé (100) comprenant :
- la détermination (110) d'une seconde configuration de réseau comprenant au moins un pilote de sondage,
- la transmission (120), au moins à l'au moins un UE (400), de l'au moins un pilote de sondage de la seconde configuration de réseau et le pilote de la première configuration de réseau, à partir de l'au moins un système d'antenne reconfigurable, dans lequel la transmission (120) comprend la transmission de l'au moins un pilote de sondage de la seconde configuration de réseau à un niveau de puissance augmenté ou diminué par rapport à la transmission du pilote de la première configuration de réseau,
- la réception (130), à partir de l'au moins un UE (400), de rapports de mesure concernant des mesures effectuées par au moins l'au moins un UE (400) à la fois sur l'au moins un pilote de sondage de la seconde configuration de réseau et le pilote de la première configuration de réseau,
- le fait de déterminer (140) si continuer à employer la première configuration de réseau ou commencer à employer la seconde configuration de réseau sur la base des rapports de mesure reçus, et
- l'emploi (150) de ladite configuration de réseau déterminée.

2. Procédé (100) selon la revendication 1, dans lequel la détermination (140) de la configuration de réseau à employer par la station de base radio (410) comprend :
la transmission des rapports de mesure reçus à un nœud d'exploitation, d'administration et de maintenance, OAM, et
la réception, à partir dudit nœud OAM, d'une indication de quelle configuration de réseau doit être employée par la station de base radio (410).

3. Procédé (100) selon la revendication 1, dans lequel la détermination (140) de quelle configuration de réseau doit être employée par la station de base radio (410) comprend la comparaison, dans la station de base radio (410), du rapport de mesure reçu concernant l'au moins un pilote de sondage de la seconde configuration de réseau et du rapport de mesure reçu concernant le pilote de la première configuration de réseau.

4. Procédé (100) selon la revendication 3, dans lequel le fait de déterminer (140) si continuer à employer la première configuration de réseau ou commencer à employer la seconde configuration de réseau comprend la sélection d'une configuration de réseau avec la meilleure performance de réseau globale et couverture maintenue comme indiqué par les rapports de mesure reçus à partir de l'au moins un UE (400).

5. Procédé (100) selon l'une quelconque des revendications 1 à 4, dans lequel l'au moins un pilote de sondage de la seconde configuration de réseau comprend : un port d'antenne ayant des propres symboles de référence ; au moins un port de symbole de référence d'informations d'état de canal, CSI RS ; ou au moins un symbole de référence spécifique à l'UE.

6. Procédé (100) selon l'une quelconque des revendications 1 à 5, dans lequel les configurations de réseau alternatives au niveau de la station de base radio (410) sont au moins une parmi : une inclinaison d'antenne, une direction de pointage de faisceau, une largeur de faisceau en azimut et une largeur de faisceau en élévation.

7. Procédé (100) selon l'une quelconque des revendications 1 à 5, dans lequel le rapport de mesure concernant au moins l'au moins un pilote de sondage de la seconde configuration de réseau, reçu à partir de l'au moins un UE (400), est reçu au moyen d'un rapport de CSI ou d'un rapport de commande de ressources radio, RRC.

8. Station de base radio (410), équipée d'au moins un système d'antenne reconfigurable comportant au moins deux éléments d'antenne, la station de base radio (410) étant configurée sonder des configurations d'antenne alternatives, la station de base radio (410) employant une première configuration de réseau comprenant un pilote quand elle dessert au moins un équipement utilisateur, UE, (400) dans un réseau de communication sans fil, la station de base radio (410) comprenant :
- une unité de traitement (413) adaptée pour déterminer une seconde configuration de réseau comprenant au moins un pilote de sondage,
- une unité de transmission (412) adaptée pour transmettre, au moins à l'au moins un UE (400), l'au moins un pilote de sondage de la seconde configuration de réseau et le pilote de la première configuration de réseau, à partir de l'au moins une antenne reconfigurable, dans lequel l'unité de transmission (412) est adaptée pour transmettre l'au moins un pilote de sondage de la seconde configuration de réseau à un niveau de puissance augmenté ou diminué par rapport à la transmission du pilote de la première configuration de réseau, et
- une unité de réception (411) adaptée pour recevoir, à partir d'au moins l'au moins un UE (400), des rapports de mesure concernant des mesures effectuées par l'au moins un UE (400) à la fois sur l'au moins un pilote de sondage de la seconde configuration de réseau et le pilote de la première configuration de réseau en service, dans lequel l'unité de traitement (413) est en outre adaptée pour déterminer si continuer à employer la première configuration de réseau ou commencer à employer la seconde configuration de réseau sur la base des rapports de mesure reçus, et pour employer ladite configuration de réseau déterminée.

9. Station de base radio (410) selon la revendication 8, dans laquelle l'unité de traitement (413) est adaptée pour déterminer quelle configuration de réseau employer par la station de base radio (410) par :
la transmission des rapports de mesure reçus à un nœud d'exploitation, d'administration et de maintenance, OAM, et
la réception, à partir dudit nœud OAM, d'une indication de quelle configuration de réseau doit être employée par la station de base radio (410).

10. Station de base radio (410) selon la revendication 8, dans laquelle l'unité de traitement (413) est adaptée pour déterminer quelle configuration de réseau doit être employée par la station de base radio (410) en comparant, dans la station de base radio (410), le rapport de mesure reçu concernant l'au moins un pilote de sondage de la seconde configuration de réseau et le rapport de mesure reçu concernant le pilote de la première configuration de réseau.

11. Station de base radio (410) selon la revendication 10, dans laquelle l'unité de traitement (413) est adaptée pour déterminer quelle configuration de réseau à employer par la station de base radio (410) en sélectionnant une configuration de réseau avec la meilleure performance de réseau globale et couverture maintenue comme indiqué par les rapports de mesure reçus à partir de l'au moins un UE (400).

12. Station de base radio (410) selon l'une quelconque des revendications 8 à 10, dans laquelle l'au moins un pilote de sondage de la seconde configuration de réseau comprend : un port d'antenne ayant des propres symboles de référence ; au moins un port de symbole de référence d'informations d'état de canal, CSI RS ; ou au moins un symbole de référence spécifique à l'UE.

13. Station de base radio (410) selon l'une quelconque des revendications 8 à 12, dans laquelle les configurations de réseau alternatives au niveau de la station de base radio (410) sont au moins une parmi : une inclinaison d'antenne, une direction de pointage de faisceau, une largeur de faisceau en azimut et une largeur de faisceau en élévation, et dans laquelle le rapport de mesure concernant au moins l'au moins un pilote de sondage de la seconde configuration de réseau, reçu à partir de l'au moins un UE (400), est reçu au moyen d'un rapport de CSI ou d'un rapport de commande de ressources radio, RRC.
